# EUROPEAN PATENT SPECIFICATION

(11) **EP 3 808 611 B1**
(45) Date of publication and mention of the grant of the patent: **18.09.2024**
(21) Application number: 20202437.8
(22) Date of filing: 16.10.2020
(51) Int. Cl.: B60R 21/231, B60R 21/239

(54) **SIDE AIRBAG APPARATUS**
SEITENAIRBAGVORRICHTUNG
ENSEMBLE COUSSIN DE SECURITE LATERAL

(30) Priority: 17.10.2019 JP 2019190443; 01.09.2020 JP 2020146848
(43) Date of publication of application: 21.04.2021
(73) Proprietor: Autoliv Development AB, 447 83 Vårgårda (SE)
(72) Inventor: KOBAYASHI, Yuto, Kanagawa 222-8580, (JP); SAKURAI, Tsutomu, Kanagawa 222-8580 (JP)
(74) Representative: Müller Verweyen

(56) References cited:
- EP-A2- 1 008 494
- JP-A- 2013 252 773
- US-A1- 2015 076 803

## Description

### TECHNICAL FIELD

The present invention relates to a side airbag apparatus mounted in a vehicle.

### BACKGROUND

Airbag apparatuses have generally become standard equipment in vehicles in recent years. An airbag apparatus is a safety apparatus that is actuated in the event of an emergency such as a vehicle collision in order to catch and protect a passenger by inflating and deploying a bag shaped airbag cushion via gas pressure.

There are various types of airbag apparatuses depending on the installation site and application. For example, a front airbag apparatus is provided in the center of the steering wheel to protect the driver from a collision in the front-back direction. In addition, to protect the passenger from impact in the vehicle width direction due to a side surface collision or the like, a curtain airbag apparatus is provided near the ceiling above the side window, while a side airbag apparatus is provided at the side portion of the seat.

The airbag cushion of a typical side airbag apparatus is in a wound or folded housing form and housed in the side part of the seat. For example, in FIG. 1 of Patent Document 1, as viewed from a passenger P1 of a seat 12, an airbag 31 is provided on the impact position side (near side), while an airbag 41 is provided on the far side from the impact position. Moreover, in FIG. 1 of Patent Document 2, as an airbag cushion provided other than a seat, an airbag 10 is provided in a console 50 between seats.

### RELATED ART DOCUMENTS

### PATENT DOCUMENTS

Patent Document 1: Japanese Unexamined Patent Application Publication No. 2010-70003
Patent Document 2: International Disclosure No. WO 2009-035115
The document JP 2013 252773 A discloses a side airbag apparatus comprising all features of the preamble of claim 1. Further side airbag apparatus are known from the US 2015/076803 A1 and EP 1 008 494 A2.

### SUMMARY OF THE INVENTION

### PROBLEM TO BE SOLVED BY THE INVENTION

Presently, at sites developing airbag apparatuses, reducing the burden on the neck of a passenger during restraint has been found to be problematic. The technique of the abovementioned Patent Document 2 is designed to allow the side surface of the airbag 10 having a reversed truncated quadrangular pyramid to restrain both the shoulder and head of a passenger. Unfortunately, because the airbag 10 is large in size, it is difficult to readily carry out the technique of Patent Document 2 in terms of the installation position and costs.

In view of such problems, the present invention aims to provide a side airbag apparatus which can reduce the burden on a passenger when the passenger is restrained in a simple configuration with an improved efficient restraining of the head of the passenger.

### MEANS FOR SOLVING THE PROBLEM

In order to resolve the above problems, an exemplary configuration of a side airbag apparatus according to the present invention includes: an airbag cushion; and an inflator which supplies gas to this airbag cushion, wherein the airbag cushion includes: a main chamber; and a sub chamber; an inner tube which cylindrically extends inside the main chamber and contains the inflator, with a portion of the inner tube adjacent to the sub chamber; a main vent which is opened at a predetermined position of the inner tube so as to release gas from this inner tube into the main chamber; and a sub vent which penetrates through the inner tube and a panel of the main chamber so as to release gas from this inner tube into the sub chamber. Regarding the surface of the sub chamber on the passenger side, the central part is recessed on the main chamber in the horizontal cross section of the airbag cushion as viewed from above, and the recessed surface of the sub chamber on the passenger side is continuously curved from both ends of this surface in the anteroposterior direction of the vehicle to the central part.

According to the abovementioned configuration, the gas can be directly fed to the sub chamber through the inner tube, such that the sub chamber is expanded early. Consequently, at the same time as or slightly before the main chamber contacts the shoulder of the passenger, the sub chamber also contacts the head of the passenger. This allows the passenger to be restrained at a position which suppresses the displacement of the head, in addition to reducing the burden on the passenger. Moreover, the gas is distributed by the inner tube, making it possible to prevent the expansion pressure of the airbag cushion from locally concentrating in the initial stage of expansion and deployment. Consequently, for example, when the passenger contacts the airbag cushion in the state in which the passenger is in a position other than the normal seating position, etc., the passenger does not have to touch a region in which the expansion pressure has locally increased, making it possible to contribute to improving the safety of the airbag cushion. The sub chamber having this configuration can be expanded along the shape of the head of the passenger, in addition to efficiently restraining the head of the passenger.

The inner diameter of the sub vent may be larger than the inner diameter of the main vent. This configuration allows an increase in the inflow amount of the gas in the sub chamber per unit time, in addition to allowing the sub chamber to finish being expanded and deployed early on from the start of operation of the inflator.

The sub vent may have a check valve structure to prevent the gas from flowing out from the sub chamber to the inner tube. This configuration can maintain the expansion pressure of the sub chamber for longer periods of time.

The airbag cushion may further include a check valve capable of discharging the gas from the sub chamber to the main chamber. This configuration can appropriately suppress the expansion pressure of the sub chamber, in addition to preventing damage to the sub chamber.

The airbag cushion may be provided on the side part of the seat on the central side of the vehicle. This configuration potentially allows inertia to suitably restrain the passenger who will move to the side opposite the impact position upon a side collision.

The sub chamber may be coupled by sewing the panel of the main chamber. This configuration can suitably embody the sub chamber.

The sub chamber may finish being expanded and deployed earlier than the main chamber. According to this configuration, at the same time as or slightly before the main chamber touches the shoulder of the passenger, the sub chamber touches the head of the passenger, making it possible to restrain the head of the passenger at the position of suppressing the displacement thereof.

### EFFECT OF THE INVENTION

The present invention enables the provision of a side airbag apparatus which can reduce the burden on a passenger when the passenger is restrained in a simple configuration.

### BRIEF DESCRIPTION OF THE DRAWINGS

FIG. 1 is a view illustrating a side airbag apparatus according to an embodiment of the present invention.
FIG. 2 is a view independently illustrating the cushion in FIG. 1(b) in each direction.
FIG. 3 is a view schematically illustrating the passenger in the normal seating position in the seat in FIG. 1(a) and the cushion in FIG. 1(a).
FIG. 4 is a view illustrating Modified Examples 1 and 2 of the cushion in FIG. 2.

### EMBODIMENT OF THE INVENTION

Preferred embodiments according to the present invention will hereinafter be described in detail with reference to the appended drawings. The dimensions, materials, other specific numerical values, etc. indicated in such embodiments are mere exemplifications for ease of understanding of the invention and do not limit the present invention unless otherwise noted. Note that in the present specification and drawings, elements having substantially identical functions and configurations are labeled with identical symbols in order to omit redundant descriptions along with the illustration of elements not directly related to the present invention.

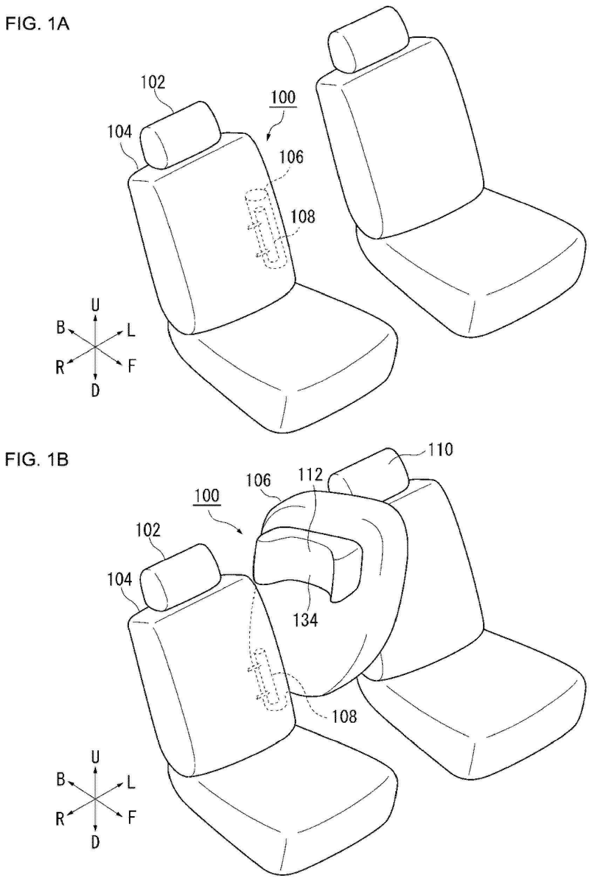

FIG. 1 is a view illustrating an example of a side airbag apparatus 100 according to an embodiment of the present invention. FIG. 1 illustrates, from the right side in the vehicle width direction on the front side of the vehicle, a side airbag apparatus 100 and a seat 102 of the vehicle in which the side airbag apparatus 100 is applied. Hereinafter, in FIG. 1 and other drawings, the anteroposterior direction of the vehicle is indicated by arrows F (forward) and B (back), respectively, the left and right in the width direction of the vehicle are respectively indicated by arrows L (left) and R (right), and the vertical direction of the vehicle is indicated by arrows U (up) and D (down), respectively.

In the present embodiment, the seat 102 is assumed to be disposed on the right side of the front row. However, the side airbag apparatus 100 can be installed on any seat of the front column, the back row, and on either left or right sides of the vehicle. Furthermore, while the seat 102 is normally directed toward the front side of the vehicle, it is also assumed that the seat 102 may be rotated to be directed toward the back side. Thus, the directions illustrated by the arrows in the drawings are not intended to be limited to the front, back, left, and right directions relative to the vehicle, with the direction of the front surface capable of being the "front" and the direction of the back side capable of being the "back" when viewed from the passenger regularly seated on the seat 102. Similarly, the direction of the right hand of the passenger at this time is "right" and the left hand direction is "left." Furthermore, the direction toward the head is "up," while the direction toward the leg is "down" with respect to the center of the body of the passenger at this time.

FIG. 1(a) illustrates a side airbag apparatus 100 before operation. An airbag cushion (hereinafter, a cushion 106) is a member for catching a passenger and, in the present embodiment, is installed on the side far from the collision position on both side parts of the seat 102. The cushion 106 is wound or folded into a housing form and, together with an inflator 108 for supplying gas, installed in an internal frame of a backrest 104 of the seat, etc.

FIG. 1(b) is a view illustrating a side airbag apparatus 100 upon operation. When a vehicle impact is detected, the cushion 106 utilizes the gas from the inflator 108 and is expanded and deployed to the side of the passenger seated in the seat 102 while pushing aside the skin of the seat 102. The cushion 106 is formed by applying sewing, adhering, etc. to a base fabric, but can also be formed by weaving using a one-piece woven (OPW) fabric, etc.

The cushion 106 according to the present embodiment includes a main chamber 110 and a sub chamber 112 as expansion regions. The main chamber 110 is a region which widely restrains the upper body around the shoulder of the passenger and is expanded and deployed in an overall flat shape. The sub chamber 112 is a region for restraining the head of the passenger and is expanded and deployed so as to protrude from the main chamber 110 to the passenger side.

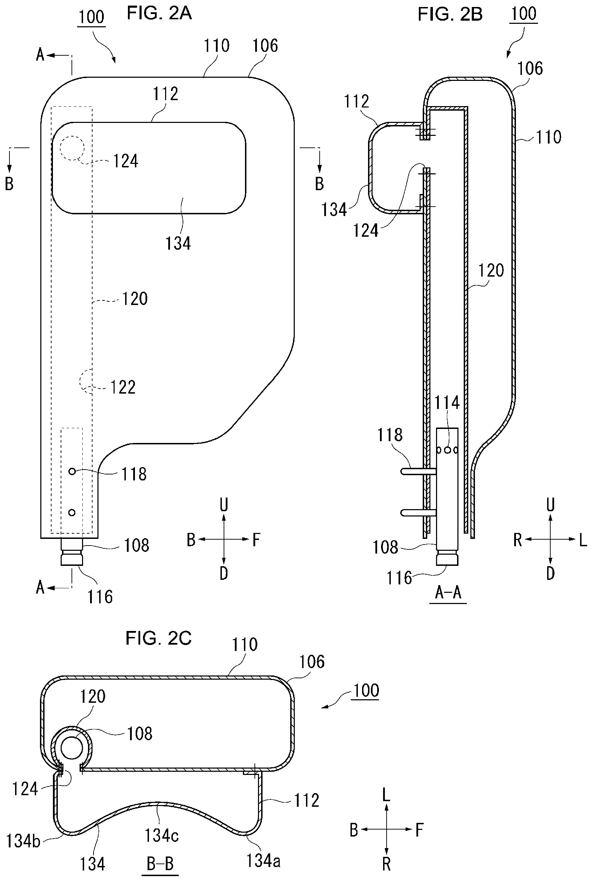

FIG. 2 is a view independently illustrating the cushion 106 in FIG. 1(b) in each direction. FIG. 2(a) is a side view obtained by viewing the cushion 106 in FIG. 1(b) from the seat 102 side. FIG. 2(a) illustrates the internal structure of the cushion 106 with broken lines.

The inflator 108 is a gas generating apparatus and, in the present embodiment, a cylinder-shaped (cylindrical) inflator is adopted. The inflator 108 has a gas jet hole 114 (see FIG. 2(b)) on the outer peripheral surface on one end side, along with a terminal 116 in which a predetermined harness is connected to the other end side. The entire inflator 108 or a portion thereof including the gas jet hole 114 is inserted from the lower part of the cushion 106 on the rear side of the vehicle. In addition, the inflator 108 is electrically connected to the vehicle side via the terminal 116, wherein, when a signal originating from the detection of an impact from the vehicle side is received, the inflator 108 operates and supplies gas to the cushion 106.

FIG. 2(b) is an A-A cross sectional view of the cushion 106 in FIG. 2(a). A total of two stud bolts 118 for mounting are provided in the inflator 108. The stud bolts 118 extend from a cylindrical main body of the inflator 108, penetrate through the inner tube as well as through the panel of the main chamber 110, and are fastened to the internal frame of the seat (see FIG. 1(b)), etc. When the stud bolts 118 of the inflator 108 are fastened to the seat, the cushion 106 can also be fixed to the seat.

Exemplary currently prevailing inflators include: a type which is filled with a gas generating agent and burns the agent to generate gas; a type which is filled with compressed gas and supplies gas without generating heat; or a hybrid type which utilizes both combustion gas and compressed gas, etc. Any type can be used for the inflator 108.

As a member for distributing the gas from the inflator 108, an inner tube 120 is provided inside the main chamber 110. The inner tube 120 contains the inflator 108 and cylindrically extends inside the main chamber 110 in the vertical direction. A portion of the inner tube 120 on the upper end side is adjacent to the sub chamber 112, enabling gas to be directly fed to the sub chamber 112.

The material of the inner tube 120 is formed using the same chemical fibers as the base fabric making up the panel of the main chamber 110, has sufficient flexibility, and can endure harsh temperature, pressure, etc. conditions upon operation of the inflator 108. While the inner tube 120 according to the present embodiment has an elongated cylindrical configuration, the thickness (diameter) thereof can be set to dimensions (in which the inner pressure is not too high) in accordance with the output of the inflator 108, etc.

As illustrated in FIG. 2(a), two vent holes (a main vent 122 and a sub vent 124) as holes for discharging the gas are provided in the inner tube 120. The main vent 122 is opened at predetermined positions such as the center and the lower side of the inner tube 120 so as to release the gas from the inner tube 120 into the main chamber 110. The sub vent 124 is opened on the upper end side of the inner tube 120 so as to release the gas from the inner tube 120 into the sub chamber 112.

As illustrated in FIG. 2(b), the sub chamber 112 is coupled by sewing the panel of the main chamber 110. In addition, the sub vent 124 is formed by penetrating through the inner tube 120 as well as through the panel of the main chamber 110. These configurations can suitably embody: the sub chamber 112 which is expanded and deployed so as to protrude from the main chamber 110 to the passenger side; and the inner tube 120 for directly feeding the gas to the sub chamber 112.

Note that the inner diameter of the sub vent 124 can be appropriately set. For example, the inner diameter of the sub vent 124 can be set so as to be larger than the inner diameter of the main vent 122 (the inner diameter of the sub vent 124 > the inner diameter of the main vent 122). This configuration can increase the inflow amount of the gas in the sub chamber 112 per unit time, in addition to allowing the sub chamber 112 to finish being expanded and deployed early on from the start of operation of the inflator 108.

The present embodiment is configured such that the inflator 108 is inserted from the lower end side of the main chamber 110, while the inner tube 120 also extends from the lower end of the main chamber 110 to the vicinity of the upper end thereof. However, for example, the position of the inflator 108 can be provided near the vertical center of the main chamber 110. If the inflator 108 is installed at the vertical center of the main chamber 110, the inner tube has dimensions allowing it to reach the sub chamber 112 from the vertical center of the main chamber 110. Even in this configuration, the abovementioned the main vent 122 and sub vent 124 can be provided in the inner tube so as to distribute the gas into the main chamber 110 and the sub chamber 112, in addition to expanding and deploying the sub chamber 112 early on.

FIG. 2(c) is a B-B cross sectional view of the cushion 106 in FIG. 2(a). This B-B cross section is the horizontal cross section of the cushion 106 as viewed from above. The inner tube 120 is cylindrically provided on the rear side of the vehicle of the main chamber 110, with the upper end side thereof disposed adjacent to the sub chamber 112. As mentioned later, the sub chamber 112 is expanded and deployed into a curved and recessed shape so as to easily restrain the head of a passenger.

Regarding the surface 134 of the sub chamber 112 on the passenger side, the central part 134c is recessed on the main chamber 110 side in the anteroposterior direction of the vehicle. In particular, this surface 134 on the passenger side is continuously curved from both the front end 134a and the rear end 134b in the anteroposterior direction of the vehicle to the central part 134c. This configuration allows the sub chamber 112 to efficiently restrain the head of the passenger.

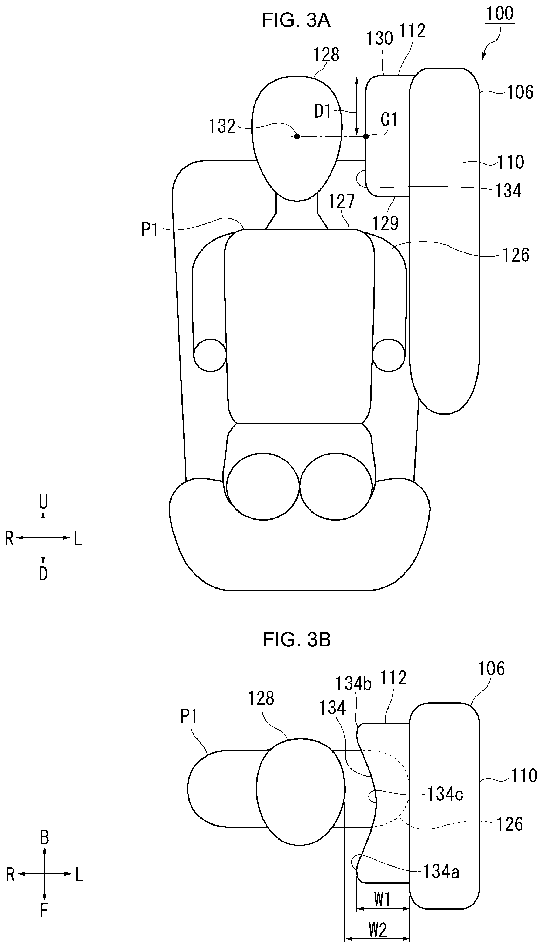

FIG. 3 is a view schematically illustrating the passenger P1 in the normal seating position in the seat 102 in FIG. 1(a) and the cushion 106 in FIG. 1(a). Note that the passenger P1 is illustrated as a dummy doll which is utilized for collision testing of vehicles, etc. As an example, upon determining the specific physique of the passenger P1, for example, a side collision test dummy WorldSID 50th male imitating a physique adapted to 50% of average adult males is available. However, without any problems, the technical ideas of this side airbag apparatus 100 can be carried out not only on a WorldSID 50th male, but also on other dummy dolls, as well as passengers with other physiques, etc.

The main chamber 110 is expanded and deployed within a wide range from the shoulder 126 to the head 128 of the passenger P1 in the normal seating position. The sub chamber 112 is expanded and deployed so as to protrude from the position above the shoulder 126 of the passenger P1 in the normal seating position to the passenger side in the main chamber 110. At this time, the lower end 129 of the sub chamber 112 is set so as to be disposed above the upper end 127 of the shoulder 126 of the passenger P1. Moreover, the upper end 130 of the sub chamber 112 is set so as to be disposed above the height of the center of gravity 132 of the head of the passenger P1 by approximately the distance D1. The sub chamber 112 having this configuration can efficiently absorb and restrain the load of the head 128 of the passenger P1.

The center C1 of the sub chamber 112 in the vertical direction is set so as to be disposed in the vicinity of the height of the head of the center of gravity 132 of the passenger P1. The vicinity of the height of the center of gravity 132 of the head is presumed to be within a range of approximately ±5% of the head 128 in the direction generally vertical to the position of the center of gravity 132 of the head in the vertical direction and within a range that can be regarded as substantially the same height as the center of gravity 132 of the head. This configuration allows the sub chamber 112 to catch the head 128 of the passenger P1 in a balanced manner, in addition to efficiently restraining the head 128. Note that in the case of the present embodiment, the center of gravity 132 of the head can be calculated as the geometric center or the mass center of the head of the abovementioned dummy doll WorldSID 50th male. While the geometric center and the mass center are slightly different depending on the distribution of the mass, they are generally at the same position.

As described above with reference to FIG. 2(b), in the present embodiment, the sub chamber 112 is expanded early on by directly feeding the gas to the sub chamber 112 through the inner tube 120. Consequently, at the same time as or slightly before the main chamber 110 contacts the vicinity of the shoulder 126 of the passenger P1, the sub chamber 112 also contacts the head 128 of the passenger P1. This allows the passenger P1 to be restrained at a position which suppresses the displacement of the head 128 to the shoulder 126, in addition to reducing the burden on the passenger P1. In this manner, this side airbag apparatus 100 can reduce the burden on the passenger P1 when the passenger P1 is restrained in a simple configuration.

Moreover, in this side airbag apparatus 100, the gas is distributed by the inner tube 120 (see FIG. 2(b), etc.), making it possible to prevent the expansion pressure of the cushion 106 from locally concentrating in the initial stage of expansion and deployment. Consequently, for example, when the passenger P1 contacts the cushion 106 in the state in which the passenger P1 is in a position other than the normal seating position, etc., the passenger P1 does not need to touch a region having a high expansion pressure, making it possible to contribute to improving the safety of the cushion 106.

The sub chamber 112 has a smaller capacity than the main chamber 110 and finishes being expanded and deployed earlier than the main chamber 110. In order to quicken the expansion and deployment of the sub chamber 112, as mentioned above, it is effective to set the inner diameter of the sub vent 124 so as to be larger than the inner diameter of the main vent 122. When the sub chamber 112 finishes being expanded early on, at the same time as or slightly before the main chamber 110 touches the shoulder 126 of the passenger P1, the sub chamber 112 touches the head 128 of the passenger P1, making it possible to restrain the passenger P1 at a position suppressing the displacement of the head 128.

FIG. 3(b) is a view obtained by viewing the passenger P1 and the cushion 106 in FIG. 3(a) from above. As mentioned above, the surface 134 of the sub chamber 112 on the passenger side is continuously gently curved from the front end 134a and the rear end 134b to the central part 134c such that the central part 134c thereof is recessed on the main chamber 110 side. The sub chamber 112 having this configuration can be expanded to a shape which tends to catch this head 128 along the shape of the head 128 of the passenger P1 so as to efficiently restrain the head 128 of the passenger P1.

In the present embodiment, the maximum protruding amount W1 of the sub chamber 112 from the main chamber 110 to the passenger side in the width direction of the vehicle is set so as to be smaller than the distance W2 between the main chamber 110 and the head 128 of the passenger P1 in the normal seating position of the seat 102 (the distance W2 > the protruding amount W1). This configuration prevents the sub chamber 112 from pushing back the head 128 of the passenger P1, in addition to suppressing the burden on the passenger P1.

As described with reference to FIG. 1(a), in this side airbag apparatus 100, the cushion 106 having the abovementioned configuration is provided on the side part of the seat 102 on the central side of the vehicle (which is the far side). If a side collision occurs to the vehicle, inertia allows the passenger P1 to move to the side (far side) opposite the impact position, that is, to the central side of the vehicle. At this time, because no structure is typically present on the central side of the vehicle, the passenger P1 may move more greatly than moving towards the impact position side (near side). When an attempt is made to restrain such a passenger P1 from the side with a flat cushion, the head 128 may fall, placing a burden on the cervical vertebra. In this regard, this cushion 106 restrains the head 128 (without falling of the head 128) by utilizing the sub chamber 112 which is expanded early on, allowing the burden on the passenger P1 to be suppressed in order to restrain the head 128.

### (Modified Examples)

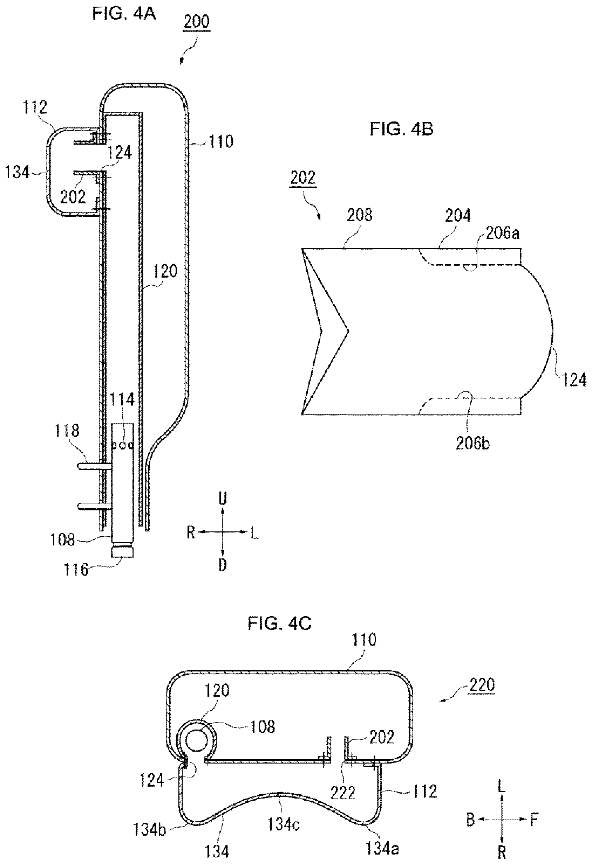

Hereinafter, modified examples of each of the abovementioned components will be described. In FIG. 4, the same components as those previously described are labeled with the same symbols, so the description of the previously described components is thereby omitted. Moreover, in the following description, the same names as the components described above shall have the same functions unless otherwise indicated even when labeled with different symbols.

FIG. 4 is a view illustrating Modified Examples 1 and 2 (cushions 200, 220) of the cushion 106 in FIG. 2. FIG. 4(a) illustrates a cross sectional view of the cushion 200 of Modified Example 1 corresponding to the cushion 106 in FIG. 2(b). The cushion 200 is configured differently from the cushion 106 in FIG. 2(b) in that a check valve 202 is provided on the sub vent 124.

The check valve 202 cylindrically extends from the sub vent 124 into the sub chamber 112, with the tip side serving as a free end. FIG. 4(b) is an enlarged view of the check valve 202 in FIG. 4(a). In the check valve 202, stitching 206a, 206b is provided at the edges of a root part 204, wherein the root part 204 has higher rigidity than the tip part 208.

Regarding the check valve 202, when the load from the passenger P1 is applied to the sub chamber 112 (see FIG. 3(a)), the flow of gas passing through the check valve 202 allows the tip part 208 to be absorbed inside a root part 206, wherein the inside of the root part 206 is blocked by the tip part 208. This can prevent the gas from flowing out from the sub chamber 112 to the inner tube 120, thereby allowing the expansion pressure of the sub chamber 112 to be maintained for longer periods of time.

FIG. 4(c) illustrates a cross sectional view of the cushion 220 of Modified Example 2 corresponding to the cushion 106 in FIG. 2(c). The cushion 220 is configured differently from each of the abovementioned cushions in that the check valve 202 is provided at a position different from the sub vent 124.

A vent hole 222 which connects the sub chamber 112 and the main chamber 110 is provided in the cushion 220, wherein the check valve 202 is provided on the main chamber 110 side of this vent hole 222. When the sub chamber 112 finishes being expanded or the load of the passenger P1 (see FIG. 3(a)) is applied on the sub chamber 112, etc., the vent hole 222 can release the gas from the sub chamber 112 to the main chamber 110. The provision of the vent hole 222 can appropriately suppress the expansion pressure of the sub chamber 112, in addition to preventing damage to the sub chamber 112. In contrast, the check valve 202 tends not to allow the gas to enter from the main chamber 110 to the sub chamber 112.

As mentioned above, regarding the cushion 220, the check valve 202 can prevent the gas from flowing backward to the sub chamber 112 (if the load of the passenger P1 is applied to the main chamber 110, etc.), maintaining the expansion pressure of the main chamber 110, in addition to preventing the irregular expansion of the sub chamber 112. Note that also in the cushion 220, as in the cushion 200 in FIG. 4(a), the sub vent 124 may have a check valve structure.

Therefore, it is obvious that a person with ordinary skill in the art can conceive of various changed examples or modified examples within the scope described in the scope of the claims, which is understood to naturally belong to the technical scope of the present invention.

### Industrial Applicability

The present invention can be used in a side airbag apparatus mounted in a vehicle.

### EXPLANATION OF CODES

100...Side airbag apparatus, 102...Seat, 104...Backrest, 106...Cushion, 108...Inflator, 110...Main chamber, 112...Sub chamber, 114...Gas jet hole, 116...Terminal, 118...Stud bolt 120...Inner tube, 122...Main vent, 124...Sub vent, 126...Shoulder, 127...Upper end of the shoulder, 128... Head, 129... Lower end of the sub chamber, 130...Upper end of the sub chamber, 132...Center of gravity of the head, 134...Surface of the sub chamber on the passenger side, 134a...Front end, 134b...Rear end, 134c...Central part, C1...Center of the sub chamber in the vertical direction, D1...Distance between the center of gravity of the head and the upper end of the sub chamber, P1...passenger, W1... Protruding amount of the sub chamber, W2...Distance between the main chamber and the head, 200...Cushion of Modified Example 1, 202...Check valve, 204...Root part, 206a, 206b...Stitching, 208...Tip part, 220...Cushion of Modified Example 2, 222...Vent hole

## Claims

1. A side airbag apparatus (100,200,220), comprising: an airbag cushion (106) which is expanded and deployed to the side of a passenger (P1) seated in a seat of a vehicle; and an inflator (108) supplying gas to this airbag cushion (106);
wherein the airbag cushion (106) comprises:
a main chamber (110) which is expanded and deployed within at least the range from the shoulder to the head of the passenger (P1) and
a sub chamber (112) which is expanded and deployed so as to protrude from the position above the shoulder of the passenger (P1) to the passenger side in the main chamber (110);
an inner tube (120) which cylindrically extends inside the main chamber (110) and contains the inflator (108), with a portion of the inner tube (120) adjacent to the sub chamber (112);
a main vent (122) which is opened at a predetermined position of the inner tube (120) so as to release gas from this inner tube (120) into the main chamber (110); and
a sub vent (124) which penetrates through the inner tube (120) and a panel of the main chamber (110) so as to release gas from this inner tube (120) into the sub chamber (112),
**characterized in that**
regarding the surface of the sub chamber (112) on the passenger side, the central part (134c) is recessed on the main chamber (110) in the horizontal cross section of the airbag cushion (106) as viewed from above, and
the recessed surface of the sub chamber (112) on the passenger side is continuously curved from both ends of this surface in the anteroposterior direction of the vehicle to the central part (134c).

2. The side airbag apparatus (100,200,220) according to claim 1, wherein the inner diameter of the sub vent (124) is larger than the inner diameter of the main vent (122).

3. The side airbag apparatus (100,200,220) according to any one of claims 1 or 2, wherein the sub vent (124) has a check valve structure to prevent the gas from flowing out from the sub chamber (112) to the inner tube (120).

4. The side airbag apparatus (100,200,220) according to any one of claims 1 to 3, wherein the airbag cushion (106) further includes a check valve (202) capable of discharging the gas from the sub chamber (112) to the main chamber (110).

5. The side airbag apparatus (100,200,220) according to any one of claims 1 to 4, wherein the airbag cushion (106) is provided on the side part of the seat (102) on the central side of the vehicle.

6. The side airbag apparatus (100,200,220) according to any one of claims 1 to 5, wherein the sub chamber (112) is coupled by sewing the panel of the main chamber (110).

7. The side airbag apparatus (100,200,220) according to any one of claims 1 to 6, wherein the sub chamber (112) finishes being expanded and deployed earlier than the main chamber (110).

## Patentansprüche

1. Seitenairbagvorrichtung (100,200,220), umfassend: ein Airbagkissen (106), das zu der Seite eines Insassen (P1), der auf einem Sitz eines Fahrzeugs sitzt, ausgedehnt und entfaltet wird; und einen Gasgenerator (108), der dieses Airbagkissen (106) mit Gas versorgt;
wobei das Airbagkissen (106) umfasst:
eine Hauptkammer (110), die innerhalb mindestens des Bereichs von der Schulter zu dem Kopf des Insassen (P1) ausgedehnt und entfaltet wird, und
eine Nebenkammer (112), die ausgedehnt und entfaltet wird, um von der Position über der Schulter des Insassen (P1) zu der Insassenseite in die Hauptkammer (110) vorzustehen;
ein Innenrohr (120), das sich innerhalb der Hauptkammer (110) zylindrisch erstreckt und den Gasgenerator (108) enthält, wobei ein Abschnitt des Innenrohrs (120) an die Nebenkammer (112) angrenzt;
eine Hauptentlüftung (122), die an einer vorherbestimmten Position des Innenrohrs (120) geöffnet wird, um Gas aus diesem Innenrohr (120) in die Hauptkammer (110) abzulassen; und
eine Nebenentlüftung (124), die durch das Innenrohr (120) und eine Platte der Hauptkammer (110) hindurchgeht, um Gas aus diesem Innenrohr (120) in die Nebenkammer (112) freizusetzen,
**dadurch gekennzeichnet, dass**
in Bezug auf die Oberfläche der Nebenkammer (112) auf der Insassenseite, der Mittelteil (134c) in die Hauptkammer (110) in dem horizontalen Querschnitt des Airbagkissens (106) von oben betrachtet ausgebuchtet ist, und
die ausgebuchtete Oberfläche der Nebenkammer (112) auf der Insassenseite von beiden Enden dieser Oberfläche in der antero-posterioren Richtung des Fahrzeugs bis zu dem Mittelteil (134c) kontinuierlich gekrümmt ist.

2. Seitenairbagvorrichtung (100,200,220) nach Anspruch 1, wobei der Innendurchmesser der Nebenentlüftung (124) größer als der Innendurchmesser der Hauptentlüftung (122) ist.

3. Seitenairbagvorrichtung (100,200,220) nach einem der Ansprüche 1 oder 2, wobei die Nebenentlüftung (124) eine Rückschlagventilstruktur aufweist, um zu verhindern, dass Gas aus der Nebenkammer (112) in das Innenrohr (120) strömt.

4. Seitenairbagvorrichtung (100,200,220) nach einem der Ansprüche 1 bis 3, wobei das Airbagkissen (106) ferner ein Rückschlagventil (202) einschließt, das in der Lage ist, das Gas aus der Nebenkammer (112) in die Hauptkammer (110) abzulassen.

5. Seitenairbagvorrichtung (100,200,220) nach einem der Ansprüche 1 bis 4, wobei das Airbagkissen (106) an der Seite des Sitzes (102) auf der Mittelseite des Fahrzeugs bereitgestellt ist.

6. Seitenairbagvorrichtung (100,200,220) nach einem der Ansprüche 1 bis 5, wobei die Nebenkammer (112) durch Vernähen der Platte der Hauptkammer (110) gekoppelt ist.

7. Seitenairbagvorrichtung (100,200,220) nach einem der Ansprüche 1 bis 6, wobei das Ausdehnen und Entfalten der Nebenkammer (112) früher beendet wird als das der Hauptkammer (110).

## Revendications

1. Appareil de coussin gonflable (100, 200, 220) comprenant : un coussin gonflable (106) qui se déploie sur le côté d'un passager (P1) assis sur le siège d'un véhicule ; et un gonfleur (108) qui alimente en gaz ce coussin gonflable (106) ;
dans lequel le coussin gonflable de sécurité gonflable (106) comprend :
une chambre principale (110) qui est étendue et déployée d'au moins la plage comprise entre l'épaule et la tête du passager (P1) et
une chambre secondaire (112) qui se déploie de manière à faire saillie depuis la position au-dessus de l'épaule du passager (P1) jusqu'au côté passager dans la chambre principale (110) ;
un tube intérieur (120) qui s'étend cylindriquement à l'intérieur de la chambre principale (110) et contient le gonfleur (108), une partie du tube intérieur (120) étant adjacente à la sous-chambre (112) ;
un évent principal (122) qui est ouvert à une position prédéterminée du tube intérieur (120) de manière à libérer le gaz de ce tube intérieur (120) dans la chambre principale (110) ; et
un évent secondaire (124) qui traverse le tube intérieur (120) et un panneau de la chambre principale (110) de manière à libérer le gaz de ce tube intérieur (120) dans la chambre secondaire (112),
**caractérisé en ce que,**
en ce qui concerne la surface de la chambre secondaire (112) du côté passager, la partie centrale (134c) est en retrait de la chambre principale (110) dans la section horizontale du coussin de coussin gonflable (106) vue d'en haut, et
la surface en retrait de la sous-chambre (112) du côté passager est continuellement incurvée depuis les deux extrémités de cette surface dans la direction antéropostérieure du véhicule jusqu'à la partie centrale (134c).

2. Dispositif d'airbag latéral (100, 200, 220) selon la revendication 1, dans lequel le diamètre intérieur de l'évent secondaire (124) est plus grand que le diamètre intérieur de l'évent principal (122).

3. Dispositif d'airbag latéral (100, 200, 220) selon l'une quelconque des revendications 1 ou 2, dans lequel le sous-évacuation (124) a une structure de soupape de retenue pour empêcher le gaz de s'écouler de la sous-chambre (112) vers le tube intérieur (120).

4. Appareil de coussin gonflable latéral (100, 200, 220) selon l'une quelconque des revendications 1 à 3, dans lequel le coussin gonflable (106) comporte en outre un clapet anti-retour (202) capable d'évacuer le gaz de la chambre secondaire (112) vers la chambre principale (110).

5. Appareil de coussin gonflable latéral (100, 200, 220) selon l'une quelconque des revendications 1 à 4, dans lequel le coussin gonflable (106) est prévu sur la partie latérale du siège (102) du côté central du véhicule.

6. Appareil de coussin gonflable latéral (100, 200, 220) selon l'une quelconque des revendications 1 à 5, dans lequel la chambre secondaire (112) est accouplée en cousant le panneau de la chambre principale (110).

7. Appareil de coussin gonflable latéral (100, 200, 220) selon l'une quelconque des revendications 1 à 6, dans lequel la sous-chambre (112) finit par être étendue et déployée plus tôt que la chambre principale (110).
